(19) Europäisches Patentamt
European Patent Office
Office européen des brevets

(11) **EP 4 782 199 A1**

(12) **EUROPEAN PATENT APPLICATION**
published in accordance with Art. 153(4) EPC

(43) Date of publication:
**29.07.2026 Bulletin 2026/31**

(21) Application number: **24882863.4**

(22) Date of filing: **24.10.2024**

(51) International Patent Classification (IPC):
**B32B 3/30** (2006.01)     **B32B 15/08** (2006.01)
**H01M 50/10** (2021.01)     **H01M 10/6556** (2014.01)

(52) Cooperative Patent Classification (CPC):
**B32B 3/30; B32B 15/08; H01M 10/6556;**
**H01M 50/10;** Y02E 60/10

(86) International application number:
**PCT/KR2024/016314**

(87) International publication number:
**WO 2025/089836 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.10.2023  KR 20230143263**

(71) Applicant: **LG Chem, Ltd.**
**Seoul 07336 (KR)**

(72) Inventors:
• **IM, Dam Hyeok**
**Daejeon 34122 (KR)**

• **YOON, Jung Hwan**
**Daejeon 34122 (KR)**
• **UM, Jun Geun**
**Daejeon 34122 (KR)**
• **JUNG, Jin Mi**
**Daejeon 34122 (KR)**
• **MOON, Sung Nam**
**Daejeon 34122 (KR)**
• **JEON, Ki Ung**
**Daejeon 34122 (KR)**

(74) Representative: **Hoffmann Eitle**
**Patent- und Rechtsanwälte PartmbB**
**Arabellastraße 30**
**81925 München (DE)**

(54) **COMPOSITE MATERIAL**

(57)     The present specification discloses a composite material and a use thereof. In one example, the composite material may be a composite material in which a metal plate and a plastic plate are joined to each other, and may be a composite material in which an internal space exists at the joint interface of the metal plate and the plastic plate. According to the contents disclosed in the present specification, when the composite material is used as a heat dissipation material (e.g., a heat sink) in which a fluid such as a cooling medium moves into the internal space, the internal space can be designed so that the fluid can perform stable and effective heat exchange with a heating element, and the like. In addition, according to the contents disclosed in the present specification, high airtightness can be secured in the internal space so that the heat exchange performance can be maintained without loss in the long term. According to the contents disclosed in the present specification, even when the composite material is manufactured in a large area or large size, it can exhibit the excellent heat exchange performance, and durability by airtightness. The present specification also discloses a use of the composite material.

**(Cont. next page)**

[Figure 3]

## Description

### Technical Field

This application claims the benefit of priority based on Korean Patent Application No. 10-2023-0143263 dated October 24, 2023, the disclosure of which is incorporated herein by reference in its entirety.

This specification discloses a composite material and a use thereof.

### Background Art

Technologies for firmly attaching dissimilar materials (e.g., metals and plastics) to each other without appearance deformation are useful in various fields.

For example, heat dissipation materials such as heat sinks are usually made of metals. The metals are useful as heat dissipation materials because they have excellent thermal conductivity, but they are disadvantageous for weight reduction. Therefore, in the heat dissipation material such as the heat sink, a material capable of simultaneously satisfying heat transfer characteristics and light weight characteristics can be formed, if a portion mainly requiring heat transfer can be formed of a metal and other portions can be formed of materials such as plastics.

However, it is not an easy problem to attach dissimilar materials such as metals and plastics firmly and stably.

For example, a method of performing attachment of dissimilar materials using an adhesive material such as an adhesive can be considered. However, an adhesive material that simultaneously exhibits high adhesive force for different materials is not common.

As another method, a method of pressurizing dissimilar materials such as metals and/or plastics to each other in a state where one or more of the materials are melted, and attaching them can also be considered. However, in this case, deformation such as bending may occur in the metals and/or plastics, which are joint materials, due to the heat applied for the melting. Therefore, for example, it is difficult to perform the joining while stably forming a certain internal space (cavity) between joint interfaces of the dissimilar materials, and it is even more difficult to suppress the deformation, particularly, in a process of manufacturing a large-area material.

In addition, when the internal space is joined while being formed, to apply the dissimilar materials as the composite material to the heat sink, and the like, airtightness must be imparted to the internal space.

In the case of a material used as the heat sink, to cool the heat transferred from the outside, a cooling medium such as coolant or air may be sometimes circulated in the internal space. Since such a cooling medium is often a fluid, even if there is a minute gap connecting the internal space with the outside, it can leak out to the outside through the gap. Therefore, in addition to simply joining dissimilar materials with a high joint strength, it is necessary to perform the joining while securing airtightness so that the minute gap does not exist in the joint portion as much as possible.

### Disclosure

### Technical Problem

The present specification discloses a composite material and a use thereof. In one example, the composite material may be a composite material in which a metal plate and a plastic plate are joined to each other, and may be a composite material in which an internal space exists at a joint interface between the metal plate and the plastic plate. It is one object of the present specification to disclose a design of the internal space so that when the composite material is used as a heat dissipation material (e.g., a heat sink) in which a fluid such as a cooling medium moves into the internal space, the fluid can perform stable and effective heat exchange with a heating element, and the like. In addition, the present specification is intended to disclose a composite material having high airtightness in the internal space so that the heat exchange performance can be maintained without loss in the long term.

The present specification is also intended to disclose a composite material that can exhibit the excellent heat exchange performance and durability by airtightness even when manufactured in a large area or large size.

The present specification is also intended to disclose a use of the composite material.

### Technical Solution

Among physical properties mentioned in this specification, the physical property that a temperature affects the physical property is a physical property measured at room temperature, unless otherwise specified.

In this specification, the term room temperature is a natural temperature without warming or cooling, which means, for example, any temperature within a range of about 10°C to 30°C, for example, a temperature of about 23°C or about 25°C or so. In addition, the unit of temperature is °C, unless otherwise specified in this specification.

Among physical properties mentioned in this specification, when a pressure affects the result, unless otherwise specified, the relevant physical property is a physical property measured at normal pressure. The term normal pressure is a natural pressure without pressurization or depressurization, in which a pressure within a range of about 700 mmHg to 800 mmHg or so is usually referred to as the normal pressure.

Among physical properties mentioned in this specification, when a humidity affects the result, unless otherwise specified, the relevant physical property is a physical property measured at standard state humidity. The standard state humidity means 40%, 50%, or 65% in terms of relative humidity.

The present specification discloses a composite material.

The term composite material may mean a material including a plastic plate and a metal plate. Specifically, the composite material may comprise a metal plate having a first surface and a second surface opposite thereto, and a plastic plate also having a first surface and a second surface opposite thereto.

Here, the first surface and the second surface are terms referring to a main surface of the metal plate or the plastic plate and a surface facing the main surface, which do not specify any order relation or any upper-lower relation. Here, the main surface means a surface with the largest area among the surfaces of the metal plate or the plastic plate.

The metal plate and the plastic plate may be in a state where they are joined to each other. For example, the first surface of the metal plate and the second surface of the plastic plate may be joined to each other. The metal plate and the plastic plate may be joined while being physically in contact with each other. This may mean, for example, a state where the joining is performed without using another material such as an adhesive.

The composite material may comprise an internal space formed at the joint interface of the plastic plate and the metal plate. Such an internal space may be formed, for example, by forming a convex portion and a concave portion on one or both plates of the plastic plate and the metal plate, and then joining the plastic plate and the metal plate.

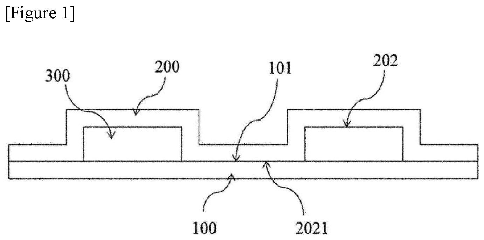

For example, as illustrated in Figure 1, a concave portion is formed on the second surface (202) of the plastic plate (200) of the composite material, and a surface (2021) of the second surface (202) of the plastic plate (202) on which the concave portion is not formed is joined to the first surface (101) of the metal plate (100) as a joint surface, so that the internal space (300) by the concave portion may be formed at the joint interface between the plastic plate (200) and the metal plate (100).

The case where the concave portion is formed on the plastic plate (200) is exemplified in Figure 1, but such a concave portion may also be formed on the metal plate (100), and may also be formed on both the metal plate (100) and the plastic plate (200).

Such an internal space may be a flow path to be described below.

The type of plastic plate included in the composite material is not particularly limited, and an appropriate type may be selected and used depending on the purpose. In one example, as the plastic plate, a plastic plate containing a resin component and a filler component may be used.

The type of the resin component included in the plastic plate is not particularly limited. For example, as the resin component, a necessary type may be appropriately selected and used among resin components known to be shapable by applying heat, and the like.

For example, a thermoplastic polymer may be used as the resin component. The types of applicable thermoplastic polymers may include various crystalline or amorphous polymers, and an example thereof may be exemplified by polyolefin-based polymers such as PP (polypropylene) or PE (polyethylene), polyalkylene oxide-based polymers such as mPPO (modified PPO (polyethylene oxide)), polyamide-based polymers such as PA (polyamide), acetal-based polymers such as POM (polyoxymethylene), polyester-based polymers such as PC (polycarbonate), PBT (polybutylene terephthalate) or PET (polyethylene terephthalate), acrylic polymers such as PMMA (poly(methyl methacrylate)), and polystyrene-based polymers such as PS (polystyrene) or ABS (acrylonitrile butadiene styrene), and the like, but is not limited thereto.

The ratio of the resin component in the plastic plate is not particularly limited, which may be adjusted to an appropriate ratio depending on the purpose.

The plastic plate may comprise a filler component as an additional component. Such a filler component may be included, for example, as a reinforcing material.

An example of the filler component is not particularly limited. For example, as a filler component, an organic filler or an inorganic filler, or an organic-inorganic filler, such as a glass filler, a carbon filler, and/or a silica filler, and the like may be applied.

The shape of the filler is determined according to the purpose, and is not particularly limited. For example, the filler may be a particulate filler (particulate filler with a spherical, rectangular, irregular or another shape), a plate-shaped filler or a fiber-shaped filler.

The thickness of the plastic plate is not particularly limited. The thickness of the plastic plate may be adjusted to an appropriate level considering physical properties such as the desired strength or thermal conductivity, and the like. For example, the lower limit of the thickness of the plastic plate may be 0.5mm, 0.6mm, 0.7mm, 0.8mm, 0.9mm, 1.0mm, 1.1mm, 1.2mm, 1.3mm, 1.4mm, 1.5mm, 1.6mm, 1.7mm, 1.8mm, 1.9mm, or 2.0 mm or so, and the upper limit thereof may be 20.0mm, 19.0mm, 18.0mm, 17.0mm, 16.0mm, 15.0mm, 14.0mm, 13.0mm, 12.0mm, 11.0mm, 10.0mm, 9.0mm, 8.0mm, 7.0mm, 6.0mm, 5.0mm, 4.0mm, 3.0 mm or 2.0 mm. The thickness may be within a range of more than or equal to, or more than any one of the above-described lower limits; or within a range of less than, or equal to or less than any one of the above-described upper limits; or within a range of less than, or equal to or less than any one of the above-described upper limits while being more than or equal to, or more than any one of the above-described lower limits.

The shape of the plastic plate is not limited. For example, the plastic plate may be plate-shaped. For formation of the internal space, the plastic plate may be a molded body having a concavo-convex shape formed by including a raised portion (convex portion) and an engraved portion (concave portion).

The method of forming the concavo-convex shape for forming the concave portion in the plastic plate is not particularly limited. For example, the concavo-convex shape may be formed by applying a known plastic molding method such as injection molding, vacuum molding, or press molding. To secure the desired airtightness and bonding force, it is necessary that no air bubbles or pores are formed inside the plastic plate during the process of forming the concavo-convex shape. In addition, to secure the airtightness and bonding force, it is necessary that while the plastic plate itself has uniformly high strength, the strength deviation between the convex and concave portions of the concavo-convex shape is small. For manufacture of such a plastic plate, it is necessary that pressures are applied to both the upper and lower portions of the plastic plate during the process of forming the concavo-convex shape. To this end, for example, the concavo-convex shape may be formed by a forming method that vacuum molding and press molding are mixed.

For example, the concavo-convex shape may be formed while applying pressures to the upper and lower portions of the plastic plate in a state where the plastic plate is heated to a certain temperature.

In this case, the relationship between the heating temperature and the glass transition temperature of the plastic plate (or the resin component included therein) may be adjusted. For example, when the heating temperature is T and the glass transition temperature is Tg, the upper limit of the absolute value of the temperature deviation calculated by an equation $100 \times (T-Tg)/Tg$ may be 60%, 55%, 50%, 45%, 40%, or 35% or so, and the lower limit thereof may be 1%, 5%, 10%, 15%, 20%, 25%, or 30% or so. The absolute value of the temperature deviation may be within a range of less than, or equal to or less than any one of the above-described upper limits; or within a range of less than, or equal to or less than any one of the above-described upper limits while being more than or equal to, or more than any one of the above-described lower limits. By applying pressures to the heated plastic plate in such a range to form a concavo-convex shape, it is possible to provide a plastic plate in which pores are minimized inside and a uniform strength is secured.

When applying pressures at the temperature thereto to form irregularities, the pressures may be applied simultaneously to the upper and lower portions of the plastic plate. In this case, when the magnitude of the pressure applied from the upper portion of the plastic plate is $P_U$ and the magnitude of the pressure applied from the lower portion is $P_L$, the upper limit of the absolute value of the pressure deviation calculated by an equation $100 \times (P_U-P_L)/P_L$ may be 60%, 55%, 50%, 45%, 40%, 35%, 30%, 28%, 26%, 24%, 22%, or 21% or so, and the lower limit thereof may be 1%, 5%, 10%, 15%, or 20% or so. The absolute value of the pressure deviation may be within a range of less than, or equal to or less than any one of the above-described upper limits; or within a range of less than, or equal to or less than any one of the above-described upper limits while being more than or equal to, or more than any one of the above-described lower limits. By applying pressures to the plastic plate in such a range to form a concavo-convex shape, it is possible to provide a plastic plate in which pores are minimized inside and a uniform strength is secured.

Such a forming method is exemplified in Manufacturing Example 1 of the present specification. However, the method applicable for implementation of the concave-convex shape is not limited to the method.

The type of metal plate applied to the composite material is not particularly limited. The metal plate may be selected according to the application of the composite material. For example, when the composite material is applied as a heat dissipation material, a metal plate having thermal conductivity in a certain level or more may be used. The metal plate may be a metal plate such as an aluminum plate, an SUS (stainless steel) plate, a tungsten plate, an iron plate, a cast iron plate, and/or a copper plate.

The thickness of the metal plate is not particularly limited. The thickness of the metal plate may be adjusted to an appropriate level depending on the purpose. For example, the lower limit of the thickness of the metal plate may be 0.5mm, 0.6mm, 0.7mm, 0.8mm, 0.9mm, 1.0mm, 1.1mm, 1.2mm, 1.3mm, 1.4mm, 1.5mm, 1.6mm, 1.7mm, 1.8mm, 1.9mm, 2.0mm, 2.1mm, 2.2mm, 2.3mm, 2.4mm, 2.5mm, 2.6mm, 2.7mm, 2.8mm, 2.9mm, or 3.0mm or so, and the upper limit thereof may be 20.0mm, 19.5mm, 19.0mm, 18.5mm, 18.0mm, 17.5mm, 17.0mm, 16.5mm, 16.0mm, 15.5mm, 15.0mm, 14.5mm, 14.0mm, 13.5mm, 13.0mm, 12.5mm, 12.0mm, 11.5mm, 11.0mm, 10.5mm, 10.0mm, 9.5mm, 9.0mm, 8.5mm, 8.0mm, 7.5mm, 7.0mm, 6.5mm, 6.0mm, 5.5mm, 5.0mm, 4.5mm, 4.0mm, 3.5mm, or 3.0mm or so. The thickness may be within a range of more than or equal to, or more than any one of the above-described lower limits; or within a range of less than, or equal to or less than any one of the above-described upper limits; or within a range of less than, or equal to or less than any one of the above-described upper limits while being more than or equal to, or more than any one of the above-described lower limits.

If necessary, for formation of the internal space, t the concavo-convex shape including the concave portion like the above-described plastic plate may also exist in the metal plate. The method of forming such a shape in the metal plate is not particularly limited, and for example, it may be formed by appropriately bending or forming the metal plate using a known metal forming method. However, in the process of forming such a concavo-convex shape in the metal plate, it may be difficult to secure airtightness due to the bending portion, and the like, so that the concavo-convex shape may not be formed in the metal plate.

A surface, which is at least in contact with the plastic plate, among the surfaces of the metal plate, may also be subjected to surface treatment. The desired bonding strength and airtightness may be more effectively secured by such surface treatment. A per pattern may be formed in the metal plate by the surface treatment. The term per pattern may mean a region including a groove formed downwardly based on the surface of the metal plate and a protrusion formed upwardly based on the surface of the metal plate. This per pattern may be confirmed when observing a cross-section of the metal plate in a direction perpendicular to the normal direction of the surface of the metal plate. The protrusion may also be referred to as a burr. Therefore, the per pattern may be formed on the surface of the metal plate, for example, at least on the surface in contact with the plastic plate.

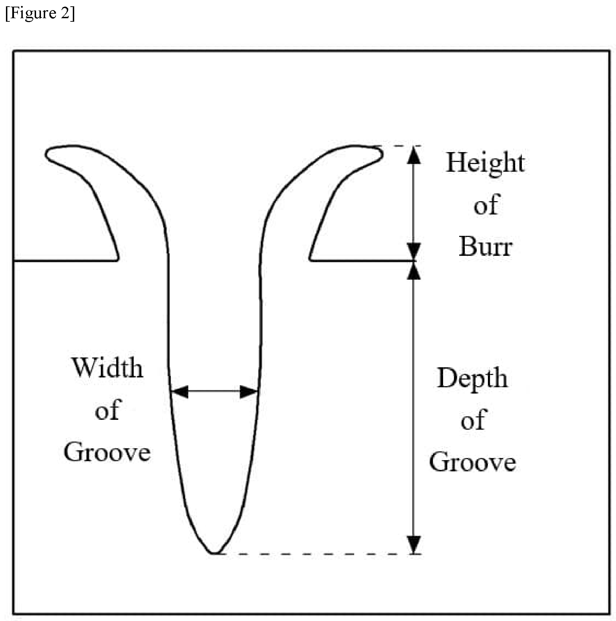

Figure 2 is an exemplary diagram of the per pattern.

In the per pattern, the depth of the groove (Groove depth in Figure 2), the width of the groove (Groove width in Figure 2), and the height of the protrusion (Burr height in Figure 2) may be selected in consideration of the desired bonding strength or airtightness, which are not particularly limited.

For example, the lower limit of the depth of the groove of the per pattern may be 30 $\mu$m, 50 $\mu$m, 70 $\mu$m, 90 $\mu$m, 110 $\mu$m, 130 $\mu$m, 150 $\mu$m, or 155 $\mu$m or so, and the upper limit thereof may be 500 $\mu$m, 450 $\mu$m, 400 $\mu$m, 350 $\mu$m, 300 $\mu$m, 250 $\mu$m, 200 $\mu$m, 190 $\mu$m, 180 $\mu$m, 170 $\mu$m, 160 $\mu$m, 150 $\mu$m, 140 $\mu$m, 130 $\mu$m, 120 $\mu$m, 100 $\mu$m, or 95 $\mu$m or so. The depth may be within a range of more than or equal to, or more than any one of the above-described lower limits; or within a range of less than, or equal to or less than any one of the above-described upper limits; or within a range of less than, or equal to or less than any one of the above-described upper limits while being more than or equal to, or more than any one of the above-described lower limits. The depth is measured based on the surface of the metal plate.

For example, the lower limit of the width of the groove of the per pattern may be 50 $\mu$m, 70 $\mu$m, 90 $\mu$m, 110 $\mu$m, 130 $\mu$m, 150 $\mu$m, 160 $\mu$m, or 170 $\mu$m or so, and the upper limit thereof may be 1,000 $\mu$m, 900 $\mu$m, 800 $\mu$m, 700 $\mu$m, 600 $\mu$m, 500 $\mu$m, 400 $\mu$m, 300 $\mu$m, 200 $\mu$m, 190 $\mu$m, 180 $\mu$m, 170 $\mu$m, 160 $\mu$m, 150 $\mu$m, 140 $\mu$m, 130 $\mu$m, or 125 $\mu$m or so. The width may be within a range of more than or equal to, or more than any one of the above-described lower limits; or within a range of less than, or equal to or less than any one of the above-described upper limits; or within a range of less than, or equal to or less than any one of the above-described upper limits while being more than or equal to, or more than any one of the above-described lower limits. The width is a value measured from a cross-section of the metal plate on which the per pattern is formed, and is the maximum value among the values measured from the cross-section of the groove.

For example, the lower limit of the height of the burr of the per pattern may be 1 $\mu$m, 5 $\mu$m, 10 $\mu$m, 15 $\mu$m, 20 $\mu$m, 25 $\mu$m, 30 $\mu$m, 35 $\mu$m, 40 $\mu$m, 45 $\mu$m, or 55 $\mu$m or so, and the upper limit may be 500 $\mu$m, 450 $\mu$m, 400 $\mu$m, 350 $\mu$m, 300 $\mu$m, 250 $\mu$m, 200 $\mu$m, 190 $\mu$m, 180 $\mu$m, 170 $\mu$m, 160 $\mu$m, 150 $\mu$m, 140 $\mu$m, 130 $\mu$m, 120 $\mu$m, 100 $\mu$m, 90 $\mu$m, 80 $\mu$m, 70 $\mu$m, 60 $\mu$m, 50 $\mu$m, 40 $\mu$m, 30 $\mu$m, or 20 $\mu$m or so. The height may be within a range of more than or equal to, or more than any one of the above-described lower limits; or within a range of less than, or equal to or less than any one of the above-described upper limits; or within a range of less than, or equal to or less than any one of the above-described upper limits while being more than or equal to, or more than any one of the above-described lower limits. The height is measured based on the surface of the metal plate.

The method of forming the per pattern on the metal plate is not particularly limited. For example, the pattern may be formed by scanning the surface of the metal plate with a laser of an appropriate output, or by physically scratching.

In the composite material, the above-described internal space may form a flow path through which a fluid may move at the joint interface. While a cooling medium such as water or air moves through the flow path, the composite material may be used as the heat dissipation material.

Such a flow path may be designed so that the cooling medium may effectively exchange heat with the heating element when the cooling medium is applied.

For example, the flow path is formed by the joint surface of the plastic plate and the metal plate, and the joint surface may be formed to include an external joint surface existing outside the flow path and a plurality of internal joint surfaces existing inside the flow path.

In this specification, the term internal joint surface is a region where the plastic plate and the metal plate are joined, which means a joint surface formed so that in a process in which a fluid moves through the flow path, the fluid can be divided by the bonding region and then rejoined.

In this specification, the term external joint surface is a region where the plastic plate and the metal plate are joined, which means a region other than the internal joint surface.

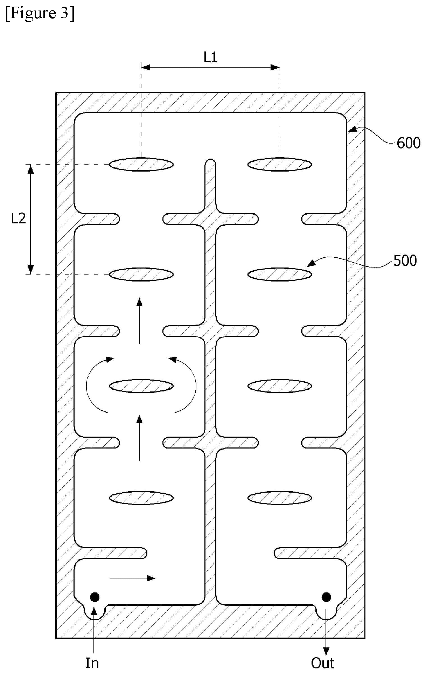

The joint surface will be explained with reference to Figure 3.

Figure 3 is a schematic diagram in the case where the composite material disclosed in this specification is observed from the front (for example, a direction perpendicular to the normal direction of the second surface of the plastic plate), where the internal joint surface (500) and the external joint surface (600) are indicated by slashes, and the portion which is not indicated by slashes is the flow path. In the same form as in Figure 3, the fluid may be injected into an inlet (In), and then move through the flow path, and may be discharged through an outlet (Out).

Looking at the drawing, it can be known that the fluid encounters the internal joint surface (500) during the movement process, is divided by the internal joint surface (500), and then merges again within the flow path, but the external joint surface does not perform this function. In the drawing, the flow of such a fluid is exemplarily indicated by arrows in some parts of the flow path.

Such a fluid may move through the flow path while contacting the metal plate.

In one example, the flow path (internal space) may be formed so that the fluid injected into the joint interface between the plastic plate and the metal plate is discharged after moving an area equal to or more than a certain percentage of the entire area of the metal plate (or the plastic plate). This means, for example, that the area of the flow path occupies a certain percentage or more of the area of the metal plate. For example, the lower limit of the ratio ($100 \times A_F/A_M$) of the area of the flow path ($A_F$) relative to the area of the metal plate ($A_M$) may be 60%, 62%, 64%, 66%, 68%, 70%, 72%, 74%, 76%, 78%, or 80% or so, and the upper limit thereof may be 99%, 97%, 95%, 93%, 91%, 89%, 87%, 85%, 83%, or 81% or so. The above ratio ($100 \times A_F/A_M$) is equal to the ratio of the area of the metal plate (or plastic plate), through which the fluid injected into the joint interface between the plastic plate and the metal plate moves, to the area of the metal plate (or plastic plate). The above ratio may be within a range of more than or equal to, or more than any one of the above-described lower limits; or within a range of less than, or equal to or less than any one of the above-described upper limits while being more than or equal to, or more than any one of the above-described lower limits. The larger the ratio, the more effectively the fluid may perform heat exchange. However, as the ratio is large, the area of the joint surface between the plastic plate and the metal plate decreases, and in that case, it is not easy to secure excellent bonding strength and airtightness, and the like. However, the composite material manufactured by the method disclosed in this specification can secure high bonding strength between the plastic plate and the metal plate, and airtightness of the internal space (flow path), while securing the ratio of $100 \times A_F/A_M$ as much as possible.

As illustrated in Figure 3, the internal joint surfaces (500) may be formed within the flow path, and a density of the internal joint surfaces (500) may be controlled to enable effective heat exchange. The density of the internal joint surfaces is a ratio of the number of internal joint surfaces formed within the flow path relative to the entire area of the flow path. The lower limit of the density of the internal joint surfaces may be $10pcs/m^2$, $15pcs/m^2$, $20pcs/m^2$, $25pcs/m^2$, $30pcs/m^2$, $35pcs/m^2$, $40pcs/m^2$, $45pcs/m^2$, $50pcs/m^2$, $51pcs/m^2$, $52pcs/m^2$, $53pcs/m^2$, or $54pcs/m^2$ or so, and the upper limit thereof may be $500pcs/m^2$, $450pcs/m^2$, $400pcs/m^2$, $350pcs/m^2$, $300pcs/m^2$, $250pcs/m^2$, $200pcs/m^2$, $150pcs/m^2$, $100pcs/m^2$, $95pcs/m^2$, $90pcs/m^2$, $85pcs/m^2$, $80pcs/m^2$, $75pcs/m^2$, $70pcs/m^2$, $65pcs/m^2$, $60pcs/m^2$, or $55pcs/m^2$ or so. The density may be within a range of more than or equal to, or more than any one of the above-described lower limits; or within a range of less than, or equal to or less than any one of the above-described upper limits while being more than or equal to, or more than any one of the above-described lower limits. The internal joint surface formed with the density may enable the fluid moving through the flow path to move while effectively scanning the entire area of the flow path, thereby enabling to perform stable and efficient heat exchange.

The internal joint surface may be designed such that R1 of Equation 1 below is within a certain range.

$$[\text{Equation 1}]$$

$$R1 = A1/A2$$

In Equation 1, A1 is the entire area of the flow path, A2 is the sum of the areas (total area) of the plurality of internal joint surfaces, and the units of A1 and A2 are the same.

The lower limit of R1 in Equation 1 may be 2, 4, 6, 8, 10, 12, 14, 16, 18, or 20 or so, and the upper limit thereof may be 90, 85, 80, 75, 70, 65, 60, 55, 50, 45, 40, 35, 30, 25, 23, or 21 or so. The R1 may be within a range of more than or equal to, or more than any one of the above-described lower limits; or within a range of less than, or equal to or less than any one of the above-described upper limits; or within a range of less than, or equal to or less than any one of the above-described upper limits while being more than or equal to, or more than any one of the above-described lower limits. The internal joint surface formed to satisfy the R1 range may enable the fluid moving through the flow path to move while effectively scanning the entire area of the flow path, thereby enabling to perform stable and efficient heat exchange.

The internal joint surface may be designed so that R2 of Equation 2 below is within a certain range.

$$[\text{Equation 2}]$$

$$R2 = A1/A3$$

In the Equation, A1 is the entire area of the flow path, and A3 is the area of a single internal joint surface (one internal joint surface). For example, if the areas of the plurality of internal joint surfaces are not constant, the A3 may be the arithmetic mean of the areas of the plurality of internal joint surfaces. The units of the above A1 and A3 are the same.

The lower limit of R2 in Equation 2 may be 95, 100, 110, 120, 130, 140, 150, 160, or 165 or so, and the upper limit thereof may be 500, 450, 400, 350, 300, 250, 200, 190, 180, or 175 or so. The R2 may be within a range of more than or equal to, or more than any one of the above-described lower limits; or within a range of less than, or equal to or less than any one of the above-described upper limits; or within a range of less than, or equal to or less than any one of the above-described upper limits while being more than or equal to, or more than any one of the above-described lower limits. The internal joint surface formed to satisfy the range of R2 above may enable the fluid moving through the flow path to move while effectively scanning the entire area of the flow path, thereby enabling to perform stable and efficient heat exchange.

The internal joint surface may be designed so that R3 of Equation 3 below is within a certain range.

[Equation 3]

$$R3 = L^2/A3$$

In Equation 3, L is the interval between multiple internal joint surfaces, and A3 is the area of a single internal joint surface (one internal joint surface).

Here, the units of the square of L and A3 are the same.

Here, the interval between multiple internal joint surfaces is the interval between the centers of adjacent internal joint surfaces (for example, L1 and L2 in Figure 3). For example, when the centers of two arbitrary internal joint surfaces have been connected, if there is no other internal joint surface on the imaginary line connecting the centers, the two internal joint surfaces can be said to be adjacent to each other. In another example, when the fluid is divided by one internal joint surface while flowing through the flow path, and then merges again, and there is an internal joint surface which subsequently meets with it, the two internal joint surfaces can be said to be adjacent to each other. Meanwhile, here, the center of the internal joint surface means the center of gravity. In addition, when the intervals between the internal joint surfaces are multiple and not constant, the smallest interval among the multiple intervals, the longest interval among the multiple intervals, or the arithmetic mean of the multiple intervals is applied to Equation 3.

The lower limit of R3 in Equation 3 may be 1, 2, 3, 4, 5, 6, 7, 8, 9, or 10 or so, and the upper limit thereof may be 50, 45, 40, 35, 30, 25, 20, 15, 14, 13, 12, or 11 or so. The R3 may be within a range of more than or equal to, or more than any one of the above-described lower limits; or within a range of less than, or equal to or less than any one of the above-described upper limits; or within a range of less than, or equal to or less than any one of the above-described upper limits while being more than or equal to, or more than any one of the above-described lower limits. The internal joint surface formed to satisfy the range of R3 above may enable the fluid moving through the flow path to move while effectively scanning the entire area of the flow path, thereby enabling to perform stable and efficient heat exchange.

The internal joint surface may be designed so that R4 of Equation 4 below is within a certain range.

[Equation 4]

$$R4 = A1/T^2$$

In Equation 4, T is the thickness of the flow path, and A1 is the entire area of the flow path.

Here, the units of the square of T and A1 are the same.

The lower limit of R4 in Equation 4 may be 5,000, 5,500, 6,000, 6,500, 7,000, 7,500, 8,000, 8,500, or 9,000 or so, and the upper limit thereof may be 50,000, 45,000, 40,000, 35,000, 30,000, 25,000, 20,000, 15,000, 10,000, 9,500, or 9,200 or so. The R4 may be within a range of more than or equal to, or more than any one of the above-described lower limits; or within a range of less than, or equal to or less than any one of the above-described upper limits; or within a range of less than, or equal to or less than any one of the above-described upper limits while being more than or equal to, or more than any one of the above-described lower limits. The internal joint surface formed to satisfy the range of R4 above may enable the fluid moving through the flow path to move while effectively scanning the entire area of the flow path at an appropriate speed, thereby enabling to perform stable and efficient heat exchange.

The shape of such an internal joint surface is not particularly limited, and if the fluid flowing through the flow path can be appropriately divided and then merge again, as described above, it can be formed in various shapes.

In the composite material, a ratio ($A_T/A_A$) of the entire area ($A_T$) of the composite material relative to the total area ($A_A$) of the external and internal joint surfaces may be adjusted. For example, the lower limit of the ratio ($A_T/A_A$) may be 1.5, 2, 2.5, 3, 3.5, 4, 4.5, or 5 or so, and the upper limit thereof may be 50, 45, 40, 35, 30, 25, 20, 15, 10, 9.5, 9, 8.5, 8, 7.5, 7, 6.5, 6, or 5.5 or so. The ratio may be within a range of more than or equal to, or more than any one of the above-described lower limits; or within a range of less than, or equal to or less than any one of the above-described upper limits; or within a range of less than, or equal to or less than any one of the above-described upper limits while being more than or equal to, or more than any one of the above-described lower limits.

The flow path designed to satisfy such conditions may enable the fluid moving therein to perform effective heat exchange while effectively scanning the entire area of the flow path at an appropriate speed. However, due to the design as above, the joint efficiency of the plastic plate and the metal plate may be reduced, and it may be difficult to secure stable airtightness for the internal space.

However, in the composite material manufactured by the method disclosed in this specification, the internal space may exhibit excellent airtightness.

For example, the composite material or the internal space (flow path) may exhibit a certain level of maximum allowable internal pressure. The maximum allowable internal pressure is an internal pressure achieved by injecting a fluid into the internal space of the composite material (internal space in a sealed state), which means an internal pressure capable of maintaining the pressure substantially constant in bar units for a certain period (about 60 seconds) from the time point when the injection of the fluid injected to achieve the internal pressure is stopped. At this time, the injected fluid may be, for example, air. In addition, the matter that the internal pressure is maintained substantially constant may be a case where it represents a 60-second pressure drop amount to be described below. A method of evaluating such a maximum allowable internal pressure is described in Test Example 2 of the Example sections of this specification. For example, the lower limit of the maximum allowable internal pressure may be 1.5 bar, 2 bar, 2.1 bar, 2.2 bar, 2.3 bar, 2.4 bar, or 2.5 bar or so, and the upper limit thereof may be 5 bar, 4.5 bar, 4 bar, 3.5 bar, 3 bar, 2.9 bar, 2.8 bar, 2.7 bar, 2.6 bar, or 2.5 bar or so. The maximum allowable internal pressure may be within a range that is equal to or greater than any one of the above-described lower limits; or within a range that is equal to or greater than any one of the above-described lower limits and at the same time less than or equal to any one of the above-described upper limits.

The internal space (flow path) of the composite material may also have airtightness exhibiting a pressure drop rate of a certain level. The pressure drop rate is a rate of pressure drop measured from the time point when the fluid injection is stopped after the fluid is injected into the internal space of the composite material (internal space in a sealed state) so that the maximum allowable internal pressure or a higher pressure is achieved, the unit of which is Pa/sec. A method of evaluating the pressure drop rate is described in Test Example 2 of the Example sections of this specification. The upper limit of the pressure drop rate may be 20, 18, 16, 14, 12, 10, 8, or 6 or so, and the lower limit thereof may be 1, 3, 5, or 7 or so. The pressure drop rate may be within a range of less than or equal to, or less than any one of the above-described upper limits; or within a range of less than, or equal to or less than any one of the above-described upper limits while being more than or equal to, or more than any one of the above-described lower limits.

The internal space of the composite material may also have airtightness representing a 60-second pressure drop amount of a certain level. The 60-second pressure drop amount means a value ($P_1$-$P_2$) obtained by injecting a fluid into the internal space so that a target pressure ($P_1$) is achieved, and then subtracting a pressure ($P_2$) at a time point when 60 seconds have passed after the injection of the fluid is stopped from the target pressure ($P_1$). At this time, the target pressure may be the maximum allowable internal pressure or a higher pressure. A method for evaluating the 60-second pressure drop amount is described in Test Example 2 of Example sections of this specification. The lower limit of the 60-second pressure drop amount may be $10 \times 10^{-4}$ bar, $15 \times 10^{-4}$ bar, $20 \times 10^{-4}$ bar, $25 \times 10^{-4}$ bar, $30 \times 10^{-4}$ bar, $35 \times 10^{-4}$ bar, or $40 \times 10^{-4}$ bar or so, and the upper limit thereof may be $200 \times 10^{-4}$ bar, $180 \times 10^{-4}$ bar, $160 \times 10^{-4}$ bar, $140 \times 10^{-4}$ bar, $120 \times 10^{-4}$ bar, $100 \times 10^{-4}$ bar, $80 \times 10^{-4}$ bar, $60 \times 10^{-4}$ bar, $55 \times 10^{-4}$ bar, $50 \times 10^{-4}$ bar, $45 \times 10^{-4}$ bar, $40 \times 10^{-4}$ bar, or $35 \times 10^{-4}$ bar or so. The above 60-second pressure drop amount may be within a range of less than or equal to, or less than any one of the above-described upper limits; or within a range of less than, or equal to or less than any one of the above-described upper limits while being more than or equal to, or more than any one of the above-described lower limits.

The internal space may have a pressure drop level $L_P$ according to Equation 5 below in a predetermined range.

$$[\text{Equation 2}]$$

$$L_P = 100 \times P_{60}/P_{MAX}$$

In Equation 5, $P_{MAX}$ is the maximum allowable internal pressure, and $P_{60}$ is the 60-second pressure drop amount.

Upon measurement of $P_{60}$ for confirming Equation 5, the target pressure is set as the maximum allowable internal pressure. A specific method for confirming Equation 2 is described in in Test Example 2 of Examples of this specification.

For example, the upper limit of the pressure drop level $L_P$ may be 0.5%, 0.4%, 0.3%, 0.200%, 0.197%, 0.194%, 0.191%, 0.188%, 0.185%, 0.182%, 0.179%, 0.176%, 0.173%, 0.170%, 0.167%, 0.164%, 0.161%, 0.158%, 0.155%, 0.152%, 0.149%, 0.146%, 0.143%, or 0.140% or so, and the lower limit thereof may be 0%, 0.01%, 0.05%, 0.1%, or 0.15% or so. The above pressure drop level $L_P$ may be within a range of less than or equal to, or less than any one of the above-described upper limits; or within a range of less than, or equal to or less than any one of the above-described upper limits while being more than or equal to, or more than any one of the above-described lower limits.

The present specification also discloses a method for manufacturing the composite material. The composite material having excellent airtightness may be manufactured by the method.

In the manufacturing method, the composite material may be manufactured by bonding the plastic plate and the metal plate.

Such a manufacturing method may comprise a step of heating and pressurizing a laminate of the plastic plate and the metal plate. The heating and pressurizing may be performed simultaneously or sequentially. For example, either one of the heating and pressurizing may be performed first, and then the next process may be performed sequentially. Alternatively, the heating and pressurizing may also be performed simultaneously. Alternatively, either one of the pressurizing and heating processes may be performed first, and then in a state where the process is maintained, the other process may also be performed. The heating and/or pressurizing may also be performed once or more.

The specific explanation of the plastic plate and the metal plate applied to the processes is as described above.

Therefore, the above-described concave portion may be formed on at least one of or both the plastic plate and the metal plate. In this case, the joining may be performed so that an internal space is formed at the joint interface between the plastic plate and the metal plate by the concave portion.

The shape of the concave portion is determined according to the use of the composite material, which is not particularly limited. For example, the concave portion may be formed so that the flow path of the design as described above may be formed.

The conditions of the heating and/or pressurizing process may be adjusted, to manufacture the composite material.

For example, the heating may be performed to satisfy Condition 1 below.

$$[\text{Condition 1}]$$

$$A \times Tg \leq T_{PP} < Tg < T_{MP} < Tm$$

In Condition 1, $T_{PP}$ may be the temperature of the plastic plate in the laminate measured upon the heating, Tg may be the glass transition temperature of the plastic plate or the resin component included in the plastic plate, $T_{MP}$ may be the interface temperature of the metal plate and the plastic plate of the laminate measured upon the heating, and Tm may be the melting temperature of the metal plate.

In Condition 1, A is any number, which may be, for example, the number of 0.35, 0.4, 0.45, 0.5, 0.55, or 0.6 or so.

As specified in Condition 1, the temperature $T_{PP}$ of the plastic plate in the laminate measured upon the heating is controlled to be equal to or more than $A \times Tg$ and less than Tg.

The temperature $T_{PP}$ of Condition 1 is adjusted according to the glass transition temperature Tg of the applied plastic plate. For example, the lower limit of the temperature $T_{PP}$ may be 50°C, 52.5°C, 55°C, 57.5°C, 60°C, 62.5°C, 65°C, 67.5°C, 70°C, 72.5°C, 75°C, 77.5°C, 80°C, 82.5°C, 85°C, 87.5°C, or 90°C or so, and the upper limit thereof may be 200°C, 195°C, 190°C, 185°C, 180°C, 175°C, 170°C, 165°C, 160°C, 155°C, 150°C, 145°C, 130°C, 195°C, 130°C, 120°C, 125°C, 110°C, 105°C, 100°C, 95°C, or 90°C or so. The temperature $T_{PP}$ may be within a range of more than or equal to, or more than any one of the above-described lower limits; or within a range of less than, or equal to or less than any one of the above-described upper limits; or within a range of less than, or equal to or less than any one of the above-described upper limits while being more than or equal to, or more than any one of the above-described lower limits.

The glass transition temperature Tg of the plastic plate or the resin component included therein is selected according to the type of the applied plastic plate, which is not particularly limited. In one example, the lower limit of the glass transition temperature Tg of Condition 1 above may be 55°C, 60°C, 65°C, 70°C, 75°C, 80°C, 85°C, 90°C, 95°C, 100°C, 105°C, 110°C, 115°C, 120°C, 125°C, 130°C, 135°C, 140°C, or 145°C or so, and the upper limit thereof may be 400°C, 390°C, 380°C, 370°C, 360°C, 350°C, 340°C, 330°C, 320°C, 310°C, 300°C, 290°C, 280°C, 270°C, 260°C, 250°C, 240°C, 230°C, 220°C, 210°C, 200°C, 190°C, 180°C, 170°C, 160°C, or 150°C or so. The glass transition temperature Tg may be within a range of more than or equal to, or more than any one of the above-described lower limits; or within a range of less than, or equal to or less than any one of the above-described upper limits; or within a range of less than, or equal to or less than any one of the above-described upper limits while being more than or equal to, or more than any one of the above-described lower limits.

In a heating process satisfying Condition 1, the ratio $Tg/T_{PP}$ of Tg to $T_{PP}$ above may be adjusted. For example, the upper limit of the ratio $Tg/T_{PP}$ may be 2.5, 2.4, 2.3, 2.2, 2.1, 2, 1.9, 1.8, 1.7, or 1.65 or so, and the lower limit thereof may be 1, 1.1, 1.2, 1.3, 1.4, 1.5, or 1.6 or so. The ratio $Tg/T_{PP}$ may be within a range may be within a range of more than or equal to, or more than any one of the above-described lower limits; or less than, or equal to or less than any one of the above-described upper limits, or within a range of less than, or equal to or less than any one of the above-described upper limits while being more than or equal to, or more than any one of the above-described lower limits.

The interface temperature $T_{MP}$ of the metal plate and the plastic plate measured upon heating in Condition 1 is determined by the glass transition temperature Tg and the melting temperature Tm. In one example, the lower limit of the temperature $T_{MP}$ may be 100°C, 110°C, 120°C, 130°C, 140°C, 150°C, 160°C, 170°C, or 180°C or so, and the upper limit thereof may be 300°C, 290°C, 280°C, 270°C, 260°C, 250°C, 240°C, 230°C, 220°C, 210°C, 200°C, 190°C, 180°C, 170°C, or 160°C or so. The interface temperature may be within a range of more than or equal to, or more than any one of the above-described lower limits; or within a range of less than, or equal to or less than any one of the above-described upper limits; or within a range of less than, or equal to or less than any one of the above-described upper limits while being more than or equal to, or more than any one of the above-described lower limits.

In the case where Condition 1 is satisfied, the ratio $T_{MP}/Tg$ of $T_{MP}$ to $Tg$ may be additionally adjusted. For example, the lower limit of the ratio $T_{MP}/Tg$ may be 0.5, 0.6, 0.7, 0.8, 0.9, 1.0, or 1.1 or so, and the upper limit thereof may be 3.0, 2.9, 2.8, 2.7, 2.6, 2.5, 2.4, 2.3, 2.2, 2.1, 2.0, 1.9, 1.8, 1.7, 1.6, 1.5, 1.4, 1.3, or 1.2 or so. The ratio $T_{MP}/Tg$ may be within a range of more than or equal to, or more than any one of the above-described lower limits; or within a range of less than, or equal to or less than any one of the above-described upper limits; or within a range of less than, or equal to or less than any one of the above-described upper limits while being more than or equal to, or more than any one of the above-described lower limits.

The melting temperature of the metal plate is adjusted according to the type of metal, which is determined according to the unique melting temperature Tm of the metal plate. In one example, the lower limit of the melting temperature of the metal plate may be 185°C, 190°C, 195°C, 200°C, 205°C, 210°C, 215°C, 220°C, 225°C, 230°C, 235°C, 240°C, 245°C, 250°C, 255°C, 260°C, or 265°C or so, and the upper limit thereof may be 900°C, 850°C, 800°C, 750°C, 700°C, 650°C, 600°C, 550°C, 500°C, 450°C, or 400°C or so. The melting temperature Tm of the metal plate may be within a range of more than or equal to, or more than any one of the above-described lower limits; or within a range of less than, or equal to or less than any one of the above-described upper limits; or within a range of less than, or equal to or less than any one of the above-described upper limits while being more than or equal to, or more than any one of the above-described lower limits.

In the case where Condition 1 is satisfied, the ratio $Tm/T_{MP}$ of $Tm$ to $T_{MP}$ may be adjusted. For example, the lower limit of the $Tm/T_{MP}$ may be 1.50, 1.55, 1.60, 1.65, 1.70, 1.75, 1.80, 1.85, 1.90, 2.00, 2.05, 2.10, 2.15, 2.20, 2.25, 2.30, 2.35, 2.40, 2.45, 2.50, 2.55, 2.60, 2.65, 2.70, 2.75, 2.80, 2.85, 2.90, 2.95, 3.00, 3.05, 3.10, 3.15, 3.20, 3.25, 3.30, 3.35, 3.40, 3.45, 3.50, 3.55, 3.60, or 3.65 or so, and the upper limit thereof may be 20.0, 19.5, 19.0, 18.5, 18.0, 17.5, 17.0, 16.5, 16.0, 15.5, 15.0, 14.5, 14.0, 13.5, 13.0, 12.5, 12.0, 11.5, 11.0, 10.5, 10.0, 9.5, 9.0, 8.5, 8.0, 7.5, 7.0, 6.5, 6.0, 5.5, 5.0, 4.5, or 4.0 or so. The ratio $Tm/T_{MP}$ may be within a range of more than or equal to, or more than any one of the above-described lower limits; or within a range of less than, or equal to or less than any one of the above-described upper limits; or within a range of less than, or equal to or less than any one of the above-described upper limits while being more than or equal to, or more than any one of the above-described lower limits.

If the condition is maintained in the heating process, the desired composite material may be effectively manufactured. The reason is not clear, but it is presumed that when the temperature is adjusted to satisfy Condition 1 above, the melting state or fluidity of the plastic plate and/or the metal plate is optimized, and accordingly, a composite material having the desired airtightness and bonding strength and no appearance deformation is obtained. In addition, such effects can be obtained even when the composite material is manufactured to have a large area.

The method in which the condition is satisfied in the heating process is not limited. For example, a method of applying heat from the upper portion and/or the lower portion of the laminate may be used. If Condition 1 above is satisfied, the heat may be applied in any one direction of the upper portion or the lower portion. However, to more effectively satisfy the condition, it is advantageous for the heat to be applied from the upper portion and the lower portion of the laminate.

The heat may be applied, for example, using a known heater, such as a ceramic heater or a coil heater. For example, when a plastic plate is positioned at the top and a metal plate is positioned at the bottom, an upper heater may be positioned to heat the plastic plate and a lower heater may be positioned to heat the metal plate, and the upper and lower heaters may be operated simultaneously. Also, for example, when a metal plate is positioned at the top and a plastic plate is positioned at the bottom, an upper heater may be positioned to heat the metal plate and a lower heater may be positioned to heat the plastic plate, and the upper and lower heaters may be operated simultaneously.

In the manufacturing method, the pressurization may be performed separately after the heating, or may be performed simultaneously with the heating, as described above.

The method of performing this pressurization is not particularly limited. For example, a method of applying pressures to the laminate by means of an appropriate mold or the like may be used. At this time, the pressure may also be applied only to a portion where the convex portion is not formed or a portion where the plastic plate and the metal plate directly contact each other in the laminate by a method of adjusting the shape of the mold, and the like.

This pressurization may be performed, for example, simultaneously at the upper portion and the lower portion of the laminate, or may also be performed only at the upper portion or the lower portion of the laminate.

The size of the pressure ($P_1$) applied upon the pressurization is not particularly limited. The pressure may be adjusted to an appropriate level depending on the purpose. For example, the lower limit of the pressure ($P_1$) may be 7000 gf/cm$^2$, 7050 gf/cm$^2$, 7100 gf/cm$^2$, 7150 gf/cm$^2$, 7200 gf/cm$^2$, 7250 gf/cm$^2$, 7300 gf/cm$^2$, 7350 gf/cm$^2$, 7400 gf/cm$^2$, 7450 gf/cm$^2$, 7500 gf/cm$^2$, 7550 gf/cm$^2$, 7600 gf/cm$^2$, 7650 gf/cm$^2$, 7700 gf/cm$^2$, 7750 gf/cm$^2$, 7800 gf/cm$^2$, 7850 gf/cm$^2$, 7900 gf/cm$^2$, 7950 gf/cm$^2$, 8000 gf/cm$^2$, 8050 gf/cm$^2$, 8100 gf/cm$^2$, 8150 gf/cm$^2$, 8200 gf/cm$^2$, 8250 gf/cm$^2$, 8300 gf/cm$^2$, 8350 gf/cm$^2$, 8400 gf/cm$^2$, 8450 gf/cm$^2$, 8500 gf/cm$^2$, 8550 gf/cm$^2$, 8600 gf/cm$^2$, 8650 gf/cm$^2$, 8700 gf/cm$^2$, 8750 gf/cm$^2$, 8800 gf/cm$^2$, 8850 gf/cm$^2$, 8900 gf/cm$^2$, 8950 gf/cm$^2$, 9000 gf/cm$^2$, 8950 gf/cm$^2$, 9000 gf/cm$^2$, 9050 gf/cm$^2$, 9100 gf/cm$^2$, 9150 gf/cm$^2$, or 9200 gf/cm$^2$ or so, and the upper limit may be 11000 gf/cm$^2$, 10950 gf/cm$^2$, 10900 gf/cm$^2$, 10850 gf/cm$^2$, 10800

gf/cm$^2$, 10750 gf/cm$^2$, 10700 gf/cm$^2$, 10650 gf/cm$^2$, 10600 gf/cm$^2$, 10550 gf/cm$^2$, 10500 gf/cm$^2$, 10450 gf/cm$^2$, 10400 gf/cm$^2$, 10350 gf/cm$^2$, 10300 gf/cm$^2$, 10250 gf/cm$^2$, 10200 gf/cm$^2$, 10150 gf/cm$^2$, 10100 gf/cm$^2$, 10050 gf/cm$^2$, 10000 gf/cm$^2$, 9950 gf/cm$^2$, 9900 gf/cm$^2$, 9850 gf/cm$^2$, 9800 gf/cm$^2$, 9750 gf/cm$^2$, 9700 gf/cm$^2$, 9650 gf/cm$^2$, 9600 gf/cm$^2$, 9550 gf/cm$^2$, 9500 gf/cm$^2$, 9450 gf/cm$^2$, 9400 gf/cm$^2$, 9350 gf/cm$^2$, 9300 gf/cm$^2$, 9250 gf/cm$^2$, or 9200 gf/cm$^2$ or so. The pressure ($P_1$) applied upon the pressurization may be within a range of more than or equal to, or more than any one of the above-described lower limits; or within a range of less than, or equal to or less than any one of the above-described upper limits; or within a range of less than, or equal to or less than any one of the above-described upper limits while being more than or equal to, or more than any one of the above-described lower limits.

The time of the pressurization is also determined according to the purpose, which is not greatly limited. For example, the lower limit of the pressurization time may be 10 seconds, 20 seconds, 30 seconds, 40 seconds, 41 seconds, 42 seconds, 43 seconds, 44 seconds, 45 seconds, 46 seconds, 47 seconds, 48 seconds, 49 seconds, or 50 seconds or so, and the upper limit thereof may be 3600 seconds, 3400 seconds, 3200 seconds, 3000 seconds, 2800 seconds, 2600 seconds, 2400 seconds, 2200 seconds, 2000 seconds, 1800 seconds, 1600 seconds, 1400 seconds, 1200 seconds, 1000 seconds, 800 seconds, 600 seconds, 400 seconds, 200 seconds, 100 seconds, 85 seconds, 80 seconds, 75 seconds, 70 seconds. 65 seconds, 60 seconds, 55 seconds, or 50 seconds or so. The time of the pressurization may be within a range of more than or equal to, or more than any one of the above-described lower limits; or within a range of less than, or equal to or less than any one of the above-described upper limits; or within a range of less than, or equal to or less than any one of the above-described upper limits while being more than or equal to, or more than any one of the above-described lower limits. In addition, the pressurization time may also be appropriately adjusted depending on the pressure applied upon the pressurization, and the like.

As described above, the heating and pressurization may be performed simultaneously or sequentially.

For example, the heating and pressurization may be performed in a manner which comprises a first step of heating the laminate of the plastic plate and the metal plate and a second step of pressurizing the laminate.

In the above case, the second step may be performed in a state satisfying Condition 1 above. For example, the heating in the first step may be performed to satisfy Condition 1 above, and the second step may be started while maintaining this state.

The method for manufacturing the composite material disclosed in this specification may further comprise a step of cooling the laminate following the heating and pressurizing processes.

For manufacture of the desired composite material, the conditions in the cooling process may be adjusted. For example, the cooling process may also be performed while applying a pressure in a certain level to the laminate.

For example, the cooling process may be performed under a pressurizing condition in which ∆P of Equation 6 below is within a predetermined range. For example, following the heating and pressurizing processes (or the second step), the cooling process may be performed in a state where the pressure applied to the laminate is adjusted so that ∆P of Equation 6 below is within a predetermined range. In one example, the upper limit of the above ∆P may be 400%, 398%, 396%, 394%, 392%, 390%, 388%, 386%, 384%, 382%, 370%, 378%, 376%, 374%, 372%, 370%, 368%, 366%, 364%, 362%, 360%, 358%, 356%, 354%, 352%, 350%, 348%, 346%, 344%, 342%, 340%, 338%, 336%, 334%, 332%, 330%, 328%, 326%, 324%, 322%, 320%, 318%, 316%, 314%, 312%, 310%, 308%, 306%, 304%, 302%, or 300% or so, and the lower limit thereof may be 200%, 202%, 204%, 206%, 208%, 210%, 212%, 214%, 216%, 218%, 220%, 222%, 224%, 226%, 228%, 230%, 232%, 234%, 236%, 238%, 240%, 242%, 244%, 246%, 248%, 250%, 252%, 254%, 256%, 258%, 260%, 262%, 264%, 266%, 268%, 270%, 272%, 274%, 276%, 278%, 280%, 282%, 284%, 286%, 288%, 290%, 292%, 294%, 296%, 298%, or 300% or so. The ∆P may be within a range of more than or equal to, or more than any one of the above-described lower limits; or within a range of less than, or equal to or less than any one of the above-described upper limits; or within a range of less than, or equal to or less than any one of the above-described upper limits while being more than or equal to, or more than any one of the above-described lower limits.

[Equation 6]

$$\Delta P = 100 \times (P_2 - P_3)/P_3$$

In Equation 6, $P_2$ is the pressure applied to the laminate in the pressurizing process before the cooling (e.g., the second step), and $P_3$ is the pressure applied to the laminate in the cooling process. The $P_2$ may be, for example, the same as the range of the pressure $P_1$ applied upon the pressurizing as described above.

The cooling of the laminate may be natural cooling or forced cooling. In the case of natural cooling, it may be performed while maintaining the laminate under a low-temperature condition (e.g., room temperature condition), and forced cooling may be performed by contacting an appropriate cooling medium (e.g., cooling water).

The desired composite material may be manufactured through the above process. The method for manufacturing the composite material may further comprise any additional step required for the process. For example, in the method, a desorbing step may be performed after the cooling process.

The composite material manufactured in such a manner has excellent bonding strength and airtightness. In addition, such a composite material may be obtained without change in appearance during the manufacturing process.

The present specification also discloses a device comprising the composite material.

For example, the device may comprise the composite material and a cooling medium. The cooling medium may be present in the flow path of the composite material, or may be prepared to be injectable into the flow path.

Such a device may be, for example, a cooling device such as the heat sink, or a thermal interface material (TIM).

Here, the type of the cooling medium is not particularly limited, and for example, a coolant such as water, or a gas such as air may be applied.

The device may also comprise a heating element and the composite material. The device may also comprise the heating element and the cooling device. In this case, the composite material and the heating element may be in thermal contact with each other. In this specification, the term thermal contact is the contact in which heat from the heating element can be transferred to the composite material, which does not necessarily mean a case where they are physically in contact with each other.

Here, the type of the heating element is not particularly limited. The heating element may be, for example, any type of component, element, or device in which heat is generated in an operation or storage process, and such heat must be controlled. An example of such a heating element includes a battery cell, a battery module, or a battery pack, and the like, but is not limited thereto.

For example, the device may further comprise the cooling medium. The cooling medium may be present in the flow path of the composite material, or may be prepared to be injectable into the flow path.

**Advantageous Effects**

The present specification discloses a composite material and a use thereof. In one example, the composite material may be a composite material in which a metal plate and a plastic plate are joined to each other, and may be a composite material in which an internal space exists at the joint interface of the metal plate and the plastic plate. According to the contents disclosed in the present specification, when the composite material is used as a heat dissipation material (e.g., a heat sink) in which a fluid such as a cooling medium moves into the internal space, the internal space can be designed so that the fluid can perform stable and effective heat exchange with a heating element, and the like. In addition, according to the contents disclosed in the present specification, high airtightness can be secured in the internal space so that the heat exchange performance can be maintained without loss in the long term.

According to the contents disclosed in the present specification, even when the composite material is manufactured in a large area or large size, it can exhibit the excellent heat exchange performance, and durability by airtightness. The present specification also discloses a use of the composite material.

**Description of Drawings**

Figure 1 is a schematic diagram of a cross-section of a side surface of the composite material.
Figure 2 is a diagram showing a pattern formed on the surface of the metal plate.
Figure 3 is a schematic diagram of the front surface of the composite material.
Figure 4 is a schematic diagram showing a bonding process of a plastic plate and a metal plate.
Figures 5 and 6 are schematic diagrams showing a process of manufacturing a plastic plate having a concave portion.
Figure 7 is a view showing results of maximum allowable internal pressure evaluation of Example 1.
Figure 8 is a view showing pressure drop of Example 1.
Figure 9 is a view showing pressure drop of Example 2.

**Mode for Invention**

Hereinafter, the present application will be specifically described through examples, but the scope of the present application is not limited by the following examples.

**Manufacturing Example 1.**

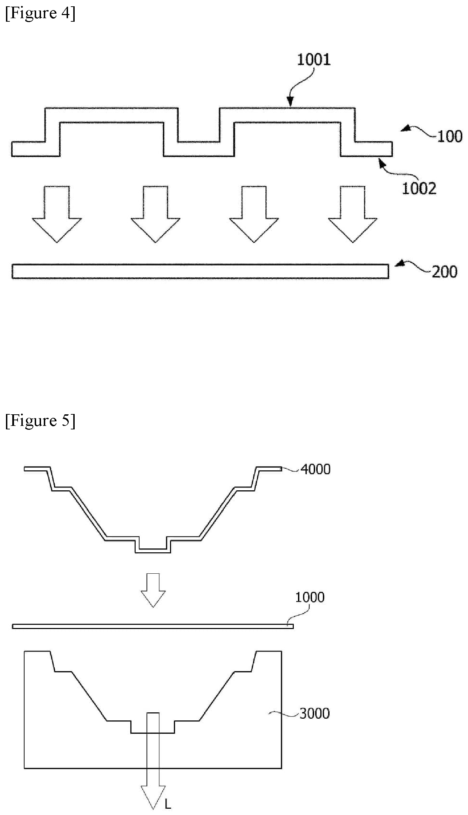

As shown in Figure 4, a plastic plate (100) on which a concavo-convex shape was formed by a concave portion (1001) and a convex portion (1002) was manufactured in the following manner. First, a rectangular plastic plate having a horizontal length of about 610 mm, a vertical length of about 308 mm, and a thickness of about 2 mm or so was prepared. Here, the shape of the concave portion (1001) was adjusted so that a flow path having a shape shown in Figure 3 was formed after joining with the metal plate. The concave portion (1001) was formed so that the entire area of the flow path formed according to Figure 3 was about 146,180 mm$^2$ or so, the entire area of the external joint surface (600) was about 29,308 mm$^2$ or so, and the total area of the internal joint surfaces (500) was about 7,050 mm$^2$ or so. Also, the internal joint surfaces (500) were formed so that a total of eight existed within the flow path, the respective internal joint surfaces (500) had the same area, the area of a single internal joint surface was about 881.26 mm$^2$ or so, and the interval between adjacent internal joint surfaces was 78.38 mm (L2 in Figure 3) or 114.45 mm (L1 in Figure 3) or so. In addition, the entire area of the plastic plate confirmed from the front after forming the concave portion was about 182538 mm$^2$ or so. In addition, the concave portion (1001) was formed to have a depth of about 4 mm or so.

First, a fabric (a rectangular plastic plate having a horizontal length of about 610 mm, a vertical length of about 308 mm, and a thickness of about 2 mm or so) was manufactured. The fabric was manufactured to have a thickness of about 2 mm or so by applying a material in which a resin component (mPPO (modified PPO (polyethylene oxide))) and a filler component (glass fibers) were blended in a weight ratio of 8:2 (mPPO: filler component) to an extrusion process. The mPPO as a resin component had a glass transition temperature (Tg) of about 145°C or so, and the glass fibers had a cross-sectional diameter of about 12.5μm or so and an aspect ratio of about 24 or so.

The glass transition temperature was measured using a DSC (differential scanning calorimeter) device (DSC 8000, Perkin Elmer (USA)). Upon measurement, a temperature section was set from 40°C to 350°C, and the glass transition temperature was measured while confirming heat flow changes in heating and cooling mode methods with a rate of 10°C/min. A sample applied to the measurement was used by having a diameter within about 2mm and weighing to have a weight of about 10mg or so.

A molded body (plastic plate (100)) of Figure 4 was manufactured using the fabric in the following manner. As shown in Figure 5, the fabric (1000) was placed on a first mold (2000) on which intaglio corresponding to the concavo-convex shape of the molded body was formed. In addition, a second mold (3000) on which a raised shape corresponding to the concavo-convex shape was formed was placed on the fabric (1000).

Subsequently, the temperature of the surface of the fabric was maintained at about 195°C using a ceramic heater. The ceramic heater was located inside a temperature-raising device, and the temperature was raised to the desired temperature through the temperature control of the PLC (programmable logic controller) system in a state where the ceramic heater was positioned on the upper portion of the fabric. It was checked using a non-contact infrared thermometer whether the surface temperature of the fabric was controlled to the desired temperature.

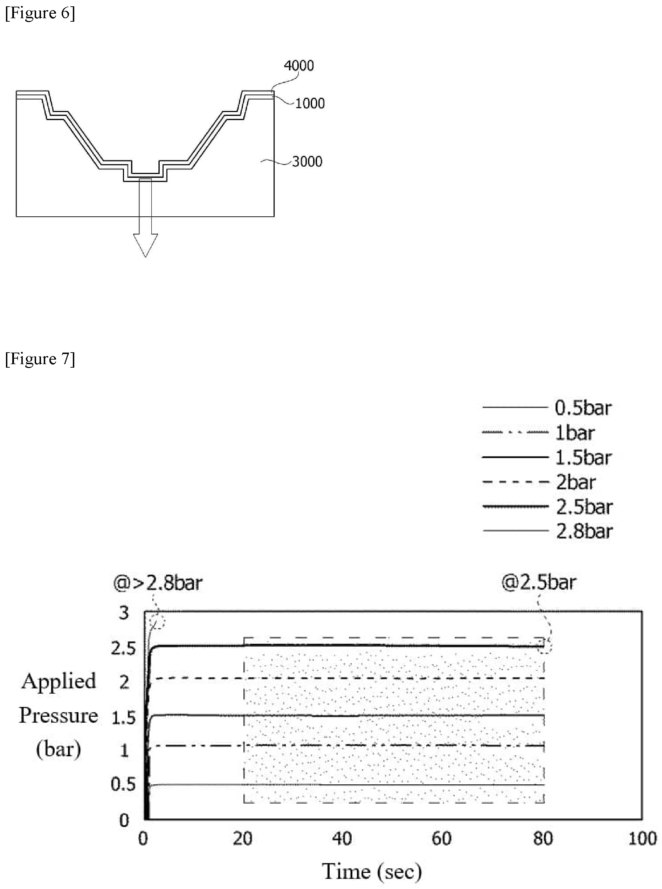

Thereafter, while maintaining the temperature, suction (L) was performed at the bottom of the first mold (2000), as shown in Figure 5, and simultaneously a pressure was applied to the fabric in the form as in Figure 6 by moving the second mold (3000) downward.

The suction (L) was performed by opening the gauge of the device 100%. This suction has a vacuum flow of about 1 atm or so based on the rate, and the pressure applied to the fabric is about 690.2 gf/cm$^2$ (applied load about 1500 kg) or so. In addition, the pressurization of the second mold (3000) was performed so that a pressure in a level of about 548.7 gf/cm$^2$ (applied load about 1000 kg) was applied to the molded body formed through the suction.

The state of the first mold (2000) and the second mold (3000) as in Figure 6 was maintained for about 10 seconds or so, and the temperature of the molded body (fabric) (1000) was reduced to about 40°C to perform a cooling process. After the cooling process, the first and second molds (2000, 3000) were separated, and the plastic plate as the molded body was recovered.

**Example 1.**

A composite material was manufactured by attaching the plastic plate of Manufacturing Example 1, and a metal plate. The attachment was performed so that the surface (1002) where the concave portion (1001) of the plastic plate (100) was not formed, as in Figure 4, was in contact with the metal plate (200).

An aluminum plate (melting temperature of about 660.3°C), in the shape of a rectangular plate, with a horizontal length of about 610mm, a vertical length of about 308 mm, and a thickness of about 3 mm or so was used for the metal plate. The melting temperature of the aluminum plate was measured under the same conditions and equipment as those used to measure the glass transition temperature of the mPPO.

Before attachment, the surface of the metal plate (200) was first laser-treated to form a per pattern. The laser treatment was performed only on the sites in contact with the plastic plate (100) in the surface of the metal plate (200).

The surface treatment was performed using a laser irradiation device (50W Fiber marking machine, K2 Laser) having a fiber source. The laser was irradiated to the area requiring the surface treatment using the laser irradiation device. The laser irradiation was performed by cross-scanning (mesh form) the surface treatment surface at a scan rate of about 800mm/sec to 900mm/sec or so, and the number of scans for the same surface was 4 times. The laser energy was applied by setting a laser output to about 50 W, and setting a repetition rate to about 70 kHz.

By the surface treatment, a pattern (Per pattern) as in Figure 2 was formed on the surface of the metal plate. Figure 2 illustrates a shape confirmed when observing a cross-section (a surface observed when cutting it along the normal direction of the surface of the aluminum plate) of the surface-treated aluminum plate. In the pattern as in Figure 2, the width (Groove width of Figure 2) was about 120 μm to 175 μm or so, the depth (Groove depth of Figure 2) was about 90 μm to 160 μm or so, and the height (Burr height of Figure 2) was about 15 μm to 55 μm or so.

Subsequently, the plastic plate (100) and the metal plate (200) were laminated in the form shown in Figure 4 to manufacture a laminate, and heating and pressurizing were performed on the laminate.

The heating and pressurizing were performed using a device (BG-200 (Modified), Sungshin Hydraulic Machinery) capable of forming a sealed internal space, heating the internal space, pressurizing the laminate in a heated state by adjusting the pressure of the internal space, and cooling. First, the laminate was placed in the sealed space of the device (BG-200 (Modified)). At this time, the plastic plate (100) of the laminate was placed on the upper portion, and the metal plate (200) was placed on the lower portion.

The laminate was heated in the state (heating process). The heating was performed by operating an upper heater located on the plastic plate (100) side of the laminate and a lower heater located on the metal plate (200) side simultaneously. The heating was performed until the temperature ($T_{PP}$) of the plastic plate (100) became about 90°C or so and the interface temperature ($T_{MP}$) of the plastic plate (100) and the metal plate (200) became about 180°C or so, by the heating. Here, the temperature of the plastic plate was measured by cross-checking using a TC (thermal couple) and a non-contact infrared thermometer built into the device (BG-200 (Modified)), and the interface temperature of the plastic plate (100) and the metal plate (200) was confirmed by placing a thermometer (a portable temperature loader (thermal couple)) directly on the interface.

When the heaters were operated by setting the temperature of the upper heater to 90°C and setting the temperature of the lower heater to 180°C, the temperature of the plastic plate and the interface temperature were confirmed at the time when about 1400 seconds had passed since the start time of the operation.

The laminate was pressurized by adjusting the pressure of the sealed internal space of the device at the time when the temperature of the plastic plate and the interface temperature reached the temperatures (pressurization process). The pressurization was performed by pressing the plastic plate using a mold to apply a load. At this time, the pressurization was performed so that the load was applied to the laminate at a pressure of about 9,200 gf/cm$^2$ (applied load about 20 tons) or so. Upon the pressurization, only the joint portion of the laminate (the surface-treated portion of the plastic plate and the metal part) was pressurized.

The pressurization was performed while maintaining the temperature of the plastic plate and the interface temperature achieved by heating before pressurization, and performed for about 50 seconds.

After the pressurization, a cooling process was performed (cooling process).

The cooling process was performed by flowing cooling water around the sealed space. The cooling was performed in a state where the pressure applied to the laminate was reduced to about 2300gf/cm$^2$ (applied load of about 5 tons), and was performed until the temperature of the laminate (the temperature of the plastic plate and the interface temperature of the plastic plate and the metal plate) became about 60°C or less.

After the cooling process, the laminate was desorbed to recover a composite material.


**Example 2.**

A composite material was manufactured in the same manner as in Example 1, except that the interface temperature ($T_{MP}$) of the plastic plate (100) and the metal plate (200) was set to about 160°C or so in the heating process, and this interface temperature was also maintained in the pressurization process.


**Example 3.**

A composite material was manufactured in the same manner as in Example 1, except that upon the heating process, only the lower heater was operated without operation of the upper heater, and the applied pressure and pressurization time of the pressurization process were changed, and the applied pressure of the cooling process was changed.

The operation of the lower heater was performed until the interface temperature ($T_{MP}$) of the plastic plate (100) and the metal plate (200) reached about 180°C or so. In this case, the temperature of the plastic plate (100) was maintained at about 50°C or so. These temperatures were measured in the same manner as in Example 1.

The pressurization process was performed so that a load was applied to the laminate at a pressure of about 18,400 gf/cm$^2$ (applied load of about 40 tons) or so in a state of maintaining the interface temperature, and performed for 90 seconds. The cooling process after performing the pressurization process was performed in the same manner as in Example 1.

**Example 4.**

A composite material was manufactured in the same manner as in Comparative Example 1, except that a load was applied to the laminate at a pressure of about 11,500 gf/cm$^2$ (applied load of about 25 tons) or so by pressurization in the pressurizing process.

**Test Example 1. Evaluation of bonding strength and appearance deformation**

The bonding strength was evaluated in the following manner. First, the same plastic plate (thickness: about 2 mm) and metal plate (thickness: about 3 mm) as used in Examples were prepared.

Subsequently, laser treatment was performed on the surface of the metal plate in the same manner as in Example 1. Thereafter, the plastic plate and the laser-treated surfaces of the metal plate were laminated, and heating, pressurizing, and cooling processes were performed under the same conditions as in the respective examples or the comparative example to manufacture specimens. Here, the lamination of the plastic plate and the metal plate was performed so that the plastic plate (100) and the metal plate (200) were crossed with each other.

The bonding strength was evaluated for the specimens manufactured as above. Since these specimens were manufactured under the same conditions using the same materials as the respective examples, the bonding strengths for the specimens may be matched to the respective examples or the comparative example.

The bonding strength was measured at room temperature (about 25°C) using a UTM (Universal Testing Machine, Zwick/roell Z030) device. The metal plate (200) of the specimen as shown in the drawing was fixed, and the protruding portion (the portion indicated by C in the drawing) of the plastic plate (100) was fixed to the device, and then the bonding strength was evaluated while peeling the plastic plate (100) from the metal plate (200). The peeling was performed at a peel angle of about 180 degrees or so (parallel between the metal-plastic material portions) and a peel rate of about 50mm/min or so.

The appearance of the composite material was evaluated separately from the foregoing. The evaluation of the appearance was directly evaluated for the composite materials manufactured in the examples. Specifically, the metal plate surface of the composite material was placed on the floor, and observed from the side, whereby it was measured whether there was a part of the composite material that had fallen from the floor due to bending, and if there was a part that had fallen, how far the distance had fallen, and thus the results were evaluated according to the following criteria.

<Evaluation criteria>

O: When the composite material does not fall from the floor and the metal plate surface of the composite material is in contact with the floor
Δ: When there is a part of the metal plate surface of the composite material that has fallen from the floor

The evaluation results according to the above description were described in Table 1 below.

[Table 1]

| | Example | | | |
|---|---|---|---|---|
| | 1 | 2 | 3 | 4 |
| Bonding strength (MPa) | 39.7 | 38.4 | 38.3 | 37.7 |
| Appearance | O | O | Δ | Δ |

**Test Example 2. Airtightness evaluation**

The airtightness of the composite material was evaluated. The airtightness evaluation was conducted on Examples 1 and 2, where appropriate results were confirmed in terms of bonding strength and appearance.

The airtightness evaluation is evaluation in which a certain pressure is applied to the internal space formed by the bonding of the convex portion (1001) of the plastic plate (100) and the metal plate (200) in the composite material, and the tendency of the pressure to be maintained or decreased is observed. In this evaluation, it is reflected that the better the tendency of the pressure of the internal space to be maintained, the stronger the bonding between the plastic plate and the metal plate.

In the composite material manufactured in the example, there is an internal space formed by the bonding of the plastic plate (100) and the metal plate (200), and this internal space is sealed by the joint portion of the plastic plate (100) and the metal plate (200). However, in the internal space, there were two passages (inlet and outlet in Figure 3) in communication with the outside, and one of the two passages was sealed by fixing a jig on which a rubber ring gasket was mounted. In addition, the other passage was also sealed by fixing a jig on which a rubber ring gasket was mounted, but air was injectable into the relevant passage. The airtightness was evaluated depending on the following order.

Step 1: Injecting air until the pressure of the internal space in the composite material reaches the target pressure;
Step 2: Stabilization by injecting air so that the target pressure is maintained and stabilized for 20 seconds from the time when air injection starts;
Step 3: Stopping air injection after Step 2 and checking the pressure drop.

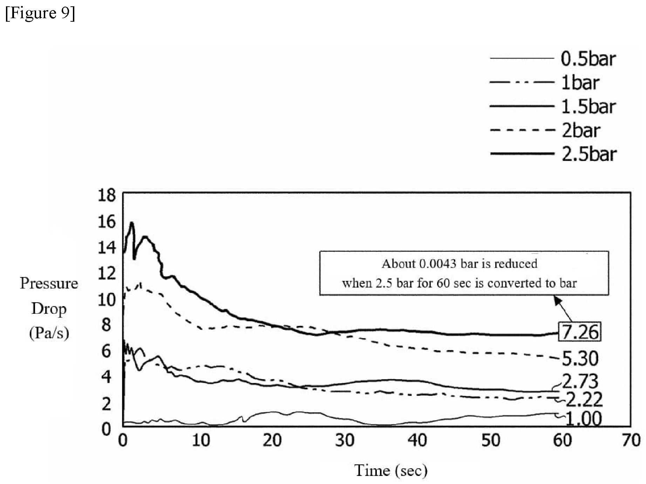

The airtightness evaluation was confirmed by a method (Pressure Decay Test Method) of specifying the pressure change due to leakage of the sealed internal space of the composite material through the process of Steps 1 to 3 as above.
Figure 7 shows the results of the evaluation for Example 1. In Figure 7, the airtightness evaluation is performed while stepwise increasing the target pressure to 0.5 bar, 1 bar, 1.5 bar, 2 bar, 2.5 bar, and 3.0 bar. That is, it is the results obtained by performing the evaluation in a way in which Steps 1 to 3 above are first performed with the target pressure set to 0.5 bar, and then Steps 1 to 3 above are sequentially performed with the target pressure set to 1 bar.
From the drawing, it can be confirmed that the pressure of the internal space is stably maintained for about 80 seconds or so up to the target pressure of 2.5 bar. When the airtightness evaluation was conducted with the target pressure set to 3.0 bar, the plastic material portion was ruptured at the time point when the internal pressure reached 2.8 bar, whereby the internal pressure could not be maintained while rapid reduction of the pressure appeared. From these results, it can be confirmed that the maximum allowable internal pressure in the case of Example 1 is at least 2.5 bar or more and less than 2.8 bar. In the evaluation of Example 2, it was also confirmed that the maximum allowable internal pressure was 2.5 bar or more and less than 2.8 bar.
In the case where it was confirmed that the target pressure (bar) was maintained, more specifically, to confirm whether the pressure was reduced, the pressure drop level was confirmed by confirming the degree of pressure drop. To more clearly check whether the pressure decreased, the pressure unit was converted to Pa, and thus the pressure drop level per hour was checked in a unit of Pa/sec.

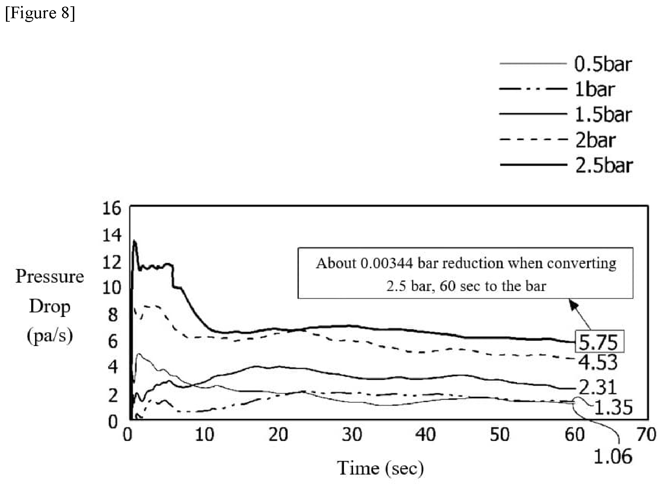

Figure 8 is the result checked in the same manner as above. Since the result of Figure 8 is the trend in Step 3 above, 0 seconds on the x-axis of Figure 8 is 20 seconds on the x-axis of Figure 7. The y-axis of Figure 8 is the pressure drop rate per unit time (unit: Pa/sec) at the relevant time point on the x-axis.
The airtightness evaluation was performed on Example 2 in the same manner. Figure 9 shows the result of specifically checking the decrease in internal pressure for Example 2 as in Example 1.
The results of the airtightness evaluation were summarized and described in Table 2 below.

[Table 2]

|  | Example | |
|  | 1 | 2 |
| --- | --- | --- |
| Maximum allowable internal pressure (bar) | 2.5 | 2.5 |
| Pressure drop rate (Pa/sec) | 5.75 | 7.26 |
| 60-second pressure drop amount (bar) | 0.0034 | 0.0043 |
| Pressure drop level | 0.137 | 0.172 |

In Table 2, the maximum allowable internal pressure is described as the maximum pressure capable of maintaining the target pressure for about 60 seconds from the time point when air injection is stopped in the case of performing the airtightness evaluation while stepwise increasing the target pressure from 0.5 bar by 0.5 bar in the order of 0.5 bar, 1 bar, 1.5 bar, 2 bar, 2.5 bar, and 3.0 bar. Here, the matter of maintaining the target pressure means that the pressures measured in bar units are maintained substantially constant.
In the case of Examples 1 and 2, when the target pressure was set to 2.5 bar, as described above, the pressure (bar) was maintained for about 60 seconds, but when it was set to 3.0 bar, a fracture occurred when it exceeded 2.8 bar, so that the maximum allowable pressure was defined as 2.5 bar.
Meanwhile, as the pressure drop rate, the rate and level, and the like are described, in which the pressure decreases from the time point when air injection is stopped (about 20 seconds after air injection). This rate was measured in a state where air was injected according to the maximum allowable internal pressure for each composite material, and then air injection was stopped about 20 seconds after the air injection, and was evaluated through pressure reduction until the time point when the pressure reduction no longer occurred.

In Table 2, the 60-second pressure drop amount ($P_{60}$) is the difference ($P_{MAX}$-$P_{60}$) between the maximum allowable internal pressure ($P_{MAX}$) and the internal pressure (P) at the time point when 60 seconds have passed after the air is stopped during the process of evaluating the drop rate (i.e., the time point when about 80 seconds have passed since the air injection started), where the unit thereof is bar.

In Table 2, the pressure drop level is the result calculated by substituting the maximum allowable internal pressure $P_{MAX}$ and the 60-second pressure drop amount $P_{60}$ into the equation of $100 \times P_{60}/P_{MAX}$.

Meanwhile, Figure 7 is a view showing results of maximum allowable internal pressure evaluation of Example 1, Figure 8 is a view showing pressure drop of Example 1, and Figure 9 is a view showing pressure drop of Example 2.

**Claims**

1. A composite material of a metal plate having a first surface and a plastic plate having a second surface, in which the first surface and the second surface are joined to each other, wherein

   a concave portion is formed on the second surface of the plastic plate,
   the surface, on which the concave portion is not formed, in the second surface of the plastic plate is joined to the first surface of the metal plate as a joint surface,
   a space by the concave portion is formed in a joint interface between the plastic plate and the metal plate,
   the space forms a flow path through which a fluid is movable at the joint interface, and
   the joint surface comprises an external joint surface existing outside the flow path and a plurality of internal joint surfaces existing inside the flow path.

2. The composite material according to claim 1, wherein the flow path is formed so that the fluid injected into the joint interface is discharged after moving an area of 60% or more of the total area of the metal plate.

3. The composite material according to claim 1, wherein the internal joint surface is formed so that the fluid can be divided by the internal joint surface during a moving process of the fluid, and then reunited.

4. The composite material according to claim 3, wherein the internal joint surface has a density in a range of 10pcs/m$^2$ to 500pcs/m$^2$ relative to the total area of the flow path.

5. The composite material according to claim 3, wherein R1 of Equation 1 below is in a range of 2 to 90 and R2 of Equation 2 below is in a range of 95 to 500:

$$[\text{Equation 1}]$$

$$R1 = A1/A2$$

$$[\text{Equation 2}]$$

$$R2 = A1/A3$$

wherein, A1 is the total area of the flow path, A2 is the sum of the total areas of the internal joint surfaces, and A3 is the area of a single internal joint surface.

6. The composite material according to claim 3, wherein R3 of Equation 3 below is in a range of 1 to 50:

$$[\text{Equation 3}]$$

$$R3 = L^2/A3$$

wherein, L is the interval between internal joint surfaces, and A3 is the area of a single internal joint surface.

7. The composite material according to claim 1, wherein a ratio ($A_T/A_A$) of the total area ($A_T$) of the composite material to the total area ($A_A$) of the external and internal joint surfaces is in a range of 1.5 to 50.

8. The composite material according to claim 1, wherein the flow path has a maximum allowable internal pressure in a range of 1.5 bar to 5 bar.

9. The composite material according to claim 1, wherein the flow path has a pressure drop rate in a range of 1 to 20 Pa/sec.

10. The composite material according to claim 1, wherein the flow path has a 60-second pressure drop amount in a range of $10 \times 10^{-4}$ to $200 \times 10^{-4}$ bar.

11. The composite material according to claim 1, wherein $L_P$ of Equation 5 below is 0.5% or less:

$$[\text{Equation 5}]$$

$$L_P = 100 \times P_{60}/P_{MAX}$$

wherein, $P_{MAX}$ is the maximum allowable internal pressure, and $P_{60}$ is the 60-second pressure drop amount.

12. A cooling device comprising the composite material of any one of claims 1 to 11; and
a cooling medium present in the flow path of the composite material or prepared to be injectable into the flow path.

13. A device comprising a heating element; and
the composite material of any one of claims 1 to 11 in thermal contact with the heating element.

14. The device according to claim 13, wherein the heating element is a battery cell, a battery module, or a battery pack.

15. The device according to claim 13, further comprising a cooling medium present in the flow path of the composite material or prepared to be injectable into the flow path.

[Figure 1]

[Figure 2]

[Figure 3]

[Figure 4]

[Figure 5]

[Figure 6]

[Figure 7]

[Figure 8]

[Figure 9]

## INTERNATIONAL SEARCH REPORT

| International application No. |
| --- |
| **PCT/KR2024/016314** |

| | |
| --- | --- |
| **A. CLASSIFICATION OF SUBJECT MATTER** | |
| **B32B 3/30**(2006.01)i; **B32B 15/08**(2006.01)i; **H01M 50/10**(2021.01)i; **H01M 10/6556**(2014.01)i | |
| According to International Patent Classification (IPC) or to both national classification and IPC | |

| |
| --- |
| **B. FIELDS SEARCHED** |
| Minimum documentation searched (classification system followed by classification symbols) |
| B32B 3/30(2006.01); B29C 45/14(2006.01); B29C 65/48(2006.01); B32B 15/08(2006.01); B32B 15/085(2006.01); B32B 27/18(2006.01); B32B 37/06(2006.01); H01M 50/227(2021.01); H01M 50/249(2021.01); H05K 7/20(2006.01) |
| Documentation searched other than minimum documentation to the extent that such documents are included in the fields searched |
| Korean utility models and applications for utility models: IPC as above<br>Japanese utility models and applications for utility models: IPC as above |
| Electronic data base consulted during the international search (name of data base and, where practicable, search terms used) |
| eKOMPASS (KIPO internal) & keywords: 플라스틱(plastic), 금속판(metal plate), 복합소재(composite), 유로(channel), 유체(flow), 장치(device) |

| | |
| --- | --- |
| **C. DOCUMENTS CONSIDERED TO BE RELEVANT** | |

| Category* | Citation of document, with indication, where appropriate, of the relevant passages | Relevant to claim No. |
| --- | --- | --- |
| X | WO 2020-255885 A1 (MITSUI CHEMICALS, INC.) 24 December 2020 (2020-12-24)<br>See paragraphs [0012], [0013], [0018] and [0032], and figures 1-3. | 1-15 |
| A | JP 2019-126989 A (PROTERIAL LTD.) 01 August 2019 (2019-08-01)<br>See claim 1, and paragraph [0016]. | 1-15 |
| A | KR 10-2022-0122089 A (LS CABLE & SYSTEM LTD.) 02 September 2022 (2022-09-02)<br>See claims 1, 2, 5, 12 and 13. | 1-15 |
| A | KR 10-1981698 B1 (KOREA INSTITUTE OF CIVIL ENGINEERING AND BUILDING TECHNOLOGY) 24 May 2019 (2019-05-24)<br>See claims 1 and 14. | 1-15 |
| A | KR 10-2017-0030964 A (HYUNDAI MOTOR COMPANY) 20 March 2017 (2017-03-20)<br>See claim 1. | 1-15 |

| | | |
| --- | --- | --- |
| ☐ Further documents are listed in the continuation of Box C. | ☑ See patent family annex. | |

| | | | |
| --- | --- | --- | --- |
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **31 January 2025** | **31 January 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2024/016314**

| Patent document cited in search report | | | Publication date (day/month/year) | Patent family member(s) | | | Publication date (day/month/year) |
|---|---|---|---|---|---|---|---|
| WO | 2020-255885 | A1 | 24 December 2020 | BR | 112021026005 | A2 | 08 February 2022 |
| | | | | CN | 114008836 | A | 01 February 2022 |
| | | | | EP | 3989331 | A1 | 27 April 2022 |
| | | | | KR | 10-2022-0011174 | A | 27 January 2022 |
| | | | | MX | 2022000035 | A | 24 February 2022 |
| | | | | US | 2022-0247003 | A1 | 04 August 2022 |
| JP | 2019-126989 | A | 01 August 2019 | None | | | |
| KR | 10-2022-0122089 | A | 02 September 2022 | WO | 2022-181902 | A1 | 01 September 2022 |
| KR | 10-1981698 | B1 | 24 May 2019 | None | | | |
| KR | 10-2017-0030964 | A | 20 March 2017 | CN | 106523486 | A | 22 March 2017 |
| | | | | CN | 106523486 | B | 05 July 2019 |
| | | | | DE | 102015224582 | A1 | 16 March 2017 |
| | | | | KR | 10-1755483 | B1 | 10 July 2017 |
| | | | | US | 2017-0074310 | A1 | 16 March 2017 |
| | | | | US | 9651076 | B2 | 16 May 2017 |

Form PCT/ISA/210 (patent family annex) (July 2022)

**EP 4 782 199 A1**

**REFERENCES CITED IN THE DESCRIPTION**

**Patent documents cited in the description**

- KR 1020230143263